Europäisches Patentamt

European Patent Office

Office européen des brevets

(19)

(11) Publication number: **0 276 622**
**A2**

# EUROPEAN PATENT APPLICATION

(21) Application number: **87600012.6**

(22) Date of filing: **09.11.87**

(51) Int. Cl.⁴: **H04M 3/58** , H04M 3/42 ,
H04Q 3/00

The title of the invention has been amended (Guidelines for Examination in the EPO, A-III, 7.3).

A request for addition of a second Greek priority of April 15, 1987 No. 870610 has been filed pursuant to Rule 88 EPC.

(30) Priority: **25.11.86 GR 862801**

(43) Date of publication of application:
**03.08.88 Bulletin 88/31**

(84) Designated Contracting States:
**AT BE CH DE ES FR GB GR IT LI LU NL SE**

(71) Applicant: **Papadakis, Ioannis**
**Ag. Ioannoy 7i**
**Ag. Paraskeyi(GR)**

(72) Inventor: **Papadakis, Ioannis**
**Ag. Ioannoy 7i**
**Ag. Paraskeyi(GR)**

(54) **Broker's call arrangement.**

(57) The system of an alternative connection MARI-NIC is a combination of electronical plates, which are placed at the telephone center and gives the possibility - to the conventional telephones - of an alternative connection. All the system functions as follows :

A first subscreiber, through the line A has called and has been connected with the telephone, user MARI-NIC.

During the conversation, a second subscreiber, through line B calls him, the telephone.

The relay of the center PH III gives an order to our apparatus and :

a) closes the relay RY I of the MARI-NIC l00l, b) it activates the generator of MARI-NIC 100I, c) it closes the relay RY of MARI-NIC 1002, d) closes the relay AD of the center, who activates and connects the B final selector with the telephone. In this way, the telephone hears the signal of calling of the activated generator from the line B.

In order to come in touch with the second calling person (of the line B) it closes the hook, in which case, it is urged the system and closes up automatically the relay RY2 of the MARI-NIC l00l as well at the line A but also at the line B. In this way, the line A is isolated completely (there is not any together hearing( and it speak with the B.

After the end of the conversation with the line Be, in order to be reconnected with the A, it closes up the hook and they are repeated again, the same as above, electronical functions as above of the MARI-NIC, through which, now it is isolated the B and it is reconnected with the line A.

With the finishing up of the conversation and as soon as the calling person closes up his hook, everything comes back again to a condition of stillness.

## "ALTERNATING JOINING TELEPHONE SYSTEM 1001-1002

The SEZ 1001-1002 device for one telephone exchange with one or more units, is installed and connected when, even one user requires to make use of it.

(SEZ 1001-1002)

The SEZ 1001 device is used collectively for each unit, while the SEZ 1002 is used exclusively for each user who asked to use it and serves the identification of his unit. Furthermore it controls the operations (functions) of SEZ 1001.

The whole system works as follows :

A first user, through line A, has called and be connected with the unit of a SEZ user.

During the conversation a second user, through line B, also calls the same SEZ user.

The exchange relay Ph III gives an order (signal) to our unit and : a) closes the relay RY 1 of SEZ 1001, b) activates the SEZ 1001 generator c) closes the relay RY of SEZ 1002, d) closes the relay ad of exchange who activates and connects the B final selector with the unit. By that way the SEZ unit receives the call signal of activated generator from line B.

To get in touch with second user (of line B) SEZ user closes the hook so the system is stimulated and automatically closes the relay RY2 of SEZ 1001 to line A but also to line B. By that way line A is totally isolated (there is no conference) and user talks to line B.

After finishing conversation with line B, in order to be reconnected with line A, SEZ user closes the hook and all above mentioned electronic operations of SEZ device are repeated again, now for isolation of line B and reconnection of line A.

After finishing the conversation and at the time that caller closes his unit, everything is back in order.

The SEZ 1001 and 1002 devices can be connected with SEZ 1003 which has only one final selector during the conversation of both A and B users and not two final selectors when only SEZ 1001 and 1002 are connected.

The above description is an improvement of the patent certificate Nr 862801 of 25.11.1986.

WIRING INSTRUCTIONS OF SEZ 1001

At first we disconnect the lining between telephone exchange and final selector of lines 1a and 1b.

CONNECTOR POSITION

1) G4 : Connect exactly G4 of exchange (limit-60V)

2) R2 : Connect with R2, position 1 of connector of SEZ 1002

3) La1 : Connect the interrupted La of exchange

4) Lb1 : Connect the interrupted Lb of exchange

5) Lb2 : Connect with Lb2, position 5 of connector of SEZ 1002 for SEZ users,or to the interrupted Lb of final,for non users.

6) La2 : Connect with La2, position 6 of connector of SEZ 1002 for SEZ users, or to the interrupted La of final, for non users.

7) PhIII/3: Connect relay snap Ph III/3 of exchange

8) GND + V: Connect for earthing of exchange ( + V)

WIRING INSTRUCTIONS FOR SEZ 1002

At first we disconnect the lining between generator B2 of exchange and telephone unit.

CONNECTOR POSITION

1) R2 : Connect with R2, position 2 of connector of SEZ 1001

2) P.BZ : Connect the interrupted BZ to unit

3) A.BZ : Connect the interrupted BZ from exchange generator

4) Lb3 : Connect with the parallel arm ( subscriber SEZ user) with the final of finals in implied connection with Lb of exchange

5) Lb2 : Connect with Lb2, position 5 of connector of SEZ 1001

6) La2 : Connect with La2, position 6 of connector of SEZ 1001

7) La3 : Connect with the parallel arm (subscriber SEZ user) with the final or finals in implied connection with La of exchange,where 60V/30V exist.

8) K.T. : (finals common) Connect in parallel to other the SEZ 1002 positions 8 k.K.T. (in case that more than one finals exist) but separately for each one SEZ user.

9) -60VK: Connect the -60V of exchange

10) GND + V: Connect for earthing of exchange ( + V)

NOTES

1) In order SEZ to function in one exchange with one final selector, a circuit SEZ 1001 should be placed, and one 1002 circuit for each user who wishes to make use of it.

2) In case that exchange has more than one finals, then number of SEZ 1001 circuit must be correspondent to the number of finals. For each SEZ user there will be placed and connected separately as many SEZ 1002 circuits as the finals of exchange.

3) The B2, with call signal will be ordinary given to SEZ user from A and B callers successively. A third caller will receive the occupied signal.

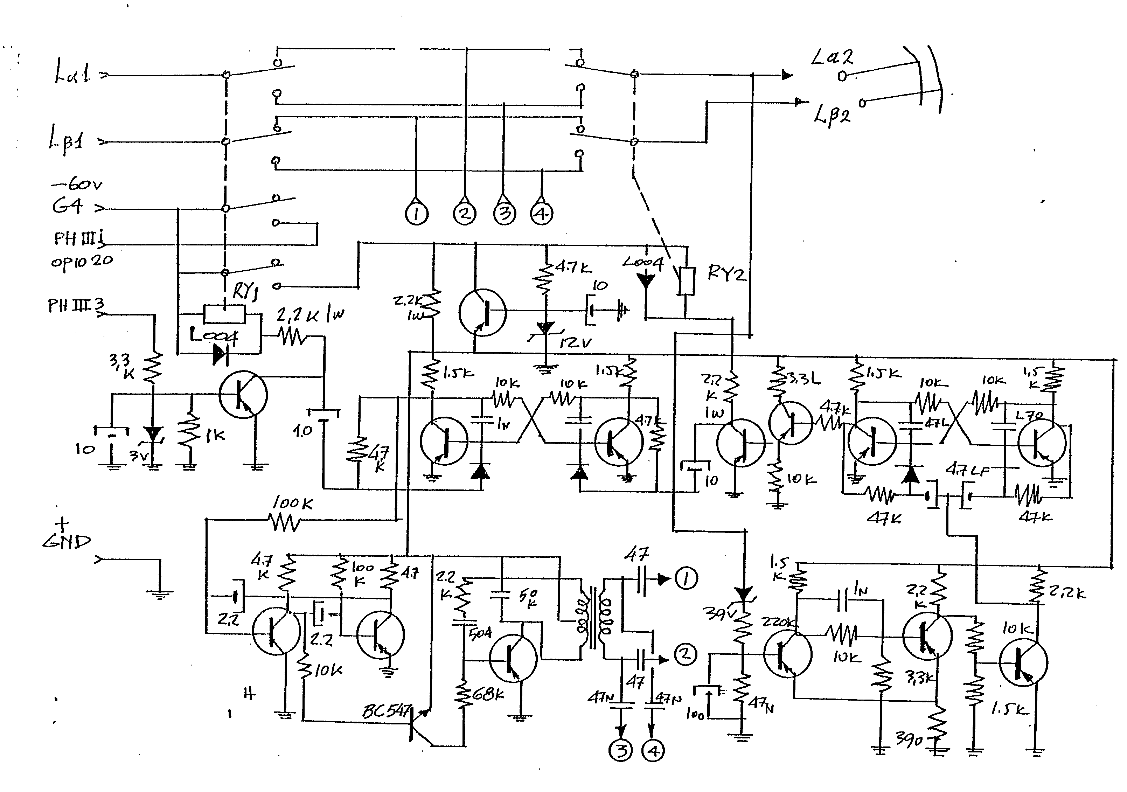

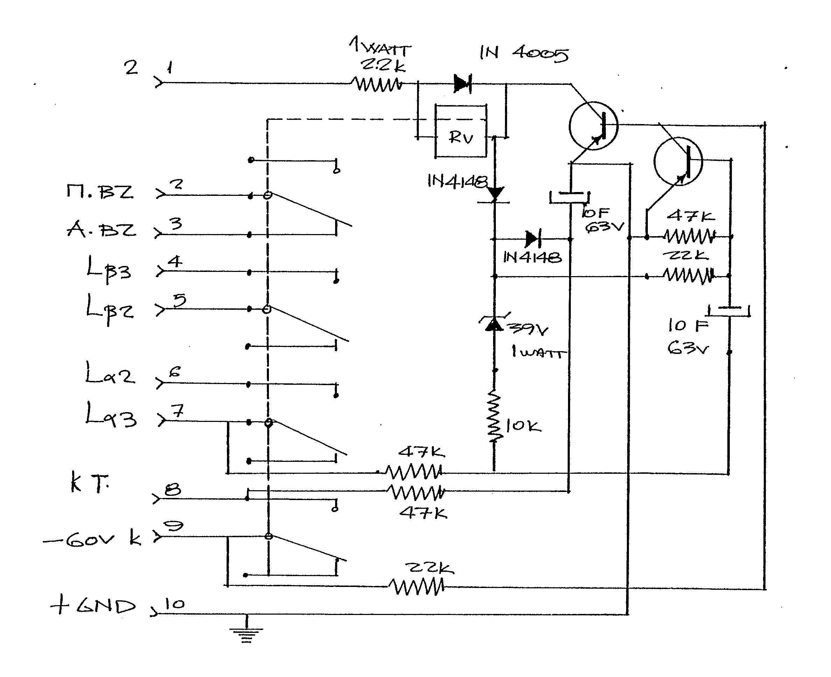

**Claims**

My invention is new, because up to this time, the conventional telephones have not the possibility, during the conversation, to perceive that they are calles by another telephone, nor to carry out an alternative connection, without to occupy another final selector, that is with the same telephone line.

The combination of the electronical circuits, which I use, grant the possibility to be served, absolutely, as much the subscreibers as also the telephone's compagny, without any addition of other cables.